# EUROPÄISCHE PATENTSCHRIFT

(11) **EP 4 019 300 B1**
(45) Veröffentlichungstag und Bekanntmachung des Hinweises auf die Patenterteilung: **11.02.2026**
(21) Anmeldenummer: 20216629.4
(22) Anmeldetag: 22.12.2020
(51) Int. Cl.: B60D 5/00, B61D 17/20

(54) **SEITENWANDVERKLEIDUNG**
SIDE WALL CLADDING
REVÊTEMENT DE PAROI LATERALE

(43) Veröffentlichungstag der Anmeldung: 29.06.2022
(73) Patentinhaber: ULTIMATE Europe Transportation Equipment GmbH, 3304 St. Georgen am Ybbsfelde (AT); Teufl, Manfred, 3332 Rosenau (AT)
(72) Erfinder: Teufl, Manfred, 3332 Rosenau (AT); Hofschweiger, Stefan, 3363 Ulmerfeld (AT)
(74) Vertreter: KLIMENT & HENHAPEL

(56) Entgegenhaltungen:
- EP-A1- 3 100 929
- EP-B1- 3 100 929
- JP-A- 2002 347 614
- US-A- 2 503 773
- US-A- 4 869 178
- US-A1- 2015 101 505

## Beschreibung

### GEBIET DER ERFINDUNG

Die vorliegende Erfindung betrifft eine Seitenwandverkleidung für die Innenseite eines Übergangs zwischen zwei gelenkig miteinander verbundenen Fahrzeugteilen, umfassend
- ein flexibles Paneel,
- zumindest einen ersten Schwenkarm, welcher um eine erste Schwenkachse schwenkbar an zumindest einer ersten Schwenkarmhalterung angebunden ist,
- zumindest einen zweiten Schwenkarm, der um eine zweite Schwenkachse schwenkbar an zumindest einer zweiten Schwenkarmhalterung angebunden ist,
wobei das Paneel zumindest mit einem Mittenabschnitt zwischen der ersten Schwenkarmhalterung und der zweiten Schwenkarmhalterung angeordnet ist und mit Endbereichen an den mindestens einen ersten Schwenkarm und den mindestens einen zweiten Schwenkarm angebunden ist, wobei das Paneel zwischen dem jeweiligen Endbereich und dem Mittenabschnitt jeweils einen Zwischenabschnitt umfasst.

### STAND DER TECHNIK

Übergänge zwischen zwei gelenkig miteinander verbundenen Fahrzeugteilen, etwa Wagenkästen, werden unter anderem bei mehrteiligen Personentransportfahrzeugen, beispielsweise bei Bussen oder Schienenfahrzeugen, eingesetzt, um den Durchtritt von Personen von einem Fahrzeugteil in das andere Fahrzeugteil zu ermöglichen. Gegenüber der Umgebung ist der Übergang in der Regel durch einen die beiden Fahrzeugteile verbindenden Falten- oder Wellenbalg abgeschirmt, der eine Relativbewegung, etwa eine Nick-, Wank- oder Schwenkbewegung bzw. einen Horizontal- oder Vertikalverssatz, zwischen den Fahrzeugteilen ausgleicht. Ebenso umfasst der Übergang ein Bodenelement, etwa einen Brückenplattenboden, und ein Deckenelement, die den Innenraum des Übergangs nach unten bzw. oben begrenzen, sodass die beförderten Personen den Falten- oder Wellenbalg nicht beschädigen können. An den Seitenwänden des Innenraums des Übergangs ist jeweils eine Seitenwandverkleidung angebracht, sodass in der Regel der Falten- oder Wellenbalg vom Innenraum des Übergangs nicht mehr oder nur in geringem Umfang zugänglich ist. Gleichzeitig erfüllt die Seitenwandverkleidung auch optische Zwecke, um die Übergänge optisch aufzuwerten.

Bei Schwenkbewegungen zwischen den Fahrzeugteilen, wie sie in der Regel bei Kurvenfahrten auftreten, vergrößert sich der Abstand der Fahrzeugteile auf der Kurvenaußenseite, während sich der sich Abstand der Fahrzeugteile auf der Kurveninnenseite verringert. Damit Seitenwandverkleidungen diese Betriebsbelastungen aufnehmen können und dabei gleichzeitig die Abdeckung der Innenwände des Übergangs gewährleisten, sind gemäß dem Stand der Technik verschiedene Ausführungen bekannt, etwa mehrteilige Schiebeelemente, die gegeneinander verschoben werden, oder zwei Aufrollelemente, von denen jeweils ein flexibles Mittelteil auf- oder abgerollt wird. Die EP 0 625 459 A1 zeigt eine Innenverkleidung eines Übergangs, bei dem eine flexibler, in Richtung der Mitte des Übergangs gewölbter, Mittelteil, über Scharniere und Halterungen gelenkig mit den Fahrzeugteilen verbunden ist. Durch die Scharniere sind die Halterungen jeweils um eine Schwenkachse schwenkbar, wobei die Schwenkachsen parallel zueinander, vorzugsweise parallel zu einer Höhenrichtung, verlaufen. Der flexible Mittelteil ist jeweils über ein elastisches Element mit der Halterung verbunden, welches elastische Element sich an einem walzenartigen Radius der Halterung abstützt und sich unter Betriebsbelastung vom Radius ablöst. Durch die Drehung der Halterung um die Scharniere und die Verformung der elastischen Elemente, wird die Längung oder Verkürzung der Seitenwand des Falten- oder Wellenbalgs aufgenommen. Die Wölbung des flexiblen Mittelteils wird durch eine Verspannung mittels eines Seilelements erreicht, wobei durch die Wölbung sichergestellt wird, dass der Mittelteil bei einer Kurvenfahrt tatsächlich in Richtung der Mitte des Übergangs ausbaucht. Hierbei wölbt sich der auf der Kurveninnenseite liegende Mittelteil stärker in das Innere des Übergangs als dies bei Geradeausfahrt der Fall ist.

Auch aus der EP 3100929 B1 ist eine Seitenwandverkleidung mit einem gewölbten Mittelteil bekannt, der sich bei Kurvenfahrt auf der Kurveninnenseite stärker in den Übergang hinein wölbt als bei Geradeausfahrt.

D.h. die Platzverhältnisse ändern sich im Übergang bei Kurvenfahrt, was die lichte Durchgangsweite verringert und somit den Innenraum vermindert.

Aus der JP 2002347614 A ist eine Plattenvorrichtung zur Ausbildung einer inneren Seitenwand eines Übergangs für ein Schienenfahrzeug bekannt. Die Plattenvorrichtung umfasst jeweils an stirnseitigen Abschnitten der Fahrzeugkarosserie von einander gegenüberliegenden Fahrzeugteilen ein um eine vertikale Achse drehbares Paneel, wobei an der Rückseite der beiden Drehpaneele jeweils eine Verriegelungsplatte unter Bildung eines vorbestimmten Spaltes angeordnet ist. Die vorbestimmten Spalte verlaufen dabei jeweils im Wesentlichen entlang zweier geradliniger Abschnitte, die zueinander stumpfwinkelig angeordnet sind und einen Knick ausbilden. Weiters umfasst die Plattenvorrichtung ein Zentralpaneel aus einem flexiblen Material, das zwischen den Drehpaneelen platziert ist, wobei vordere und hintere Abschnitte des zentralen Paneels gleitend in die vorbestimmten Spalte zwischen den Drehpaneelen und den Verriegelungsplatten eingesetzt sind. Das Zentralpaneel ist an Spannmitteln, insbesondere Federn, aufgehängt, sodass das Zentralpaneel mit seinen vorderen und hinteren Abschnitten auch bei Versatz der beiden Fahrzeugteile zueinander in den vorbestimmten Spalten angeordnet bleibt. Aus der US 2015/101505 A1 ist eine Seitenwandverkleidung mit einem Wandpaneel zur Anordnung zwischen zwei Wagenabteilen bekannt, wobei zwei vertikal an den Rändern des Wandpaneels angeordnete Federspulen zur Spannung bzw. Straffung des Wandpaneels vorgesehen sind.

### AUFGABE DER ERFINDUNG

Es ist daher Aufgabe der vorliegenden Erfindung, eine verbesserte Seitenwandverkleidung zu schaffen, die den oben genannten Nachteil vermeidet. Insbesondere sollen dabei unterschiedliche bzw. aufgrund von Kurvenfahrt variierende Wölbungen eines Mittelteils der Seitenwandverkleidung vermieden werden.

### DARSTELLUNG DER ERFINDUNG

Zur Lösung der genannten Aufgabe ist es bei einer Seitenwandverkleidung für die Innenseite eines Übergangs zwischen zwei gelenkig miteinander verbundenen Fahrzeugteilen, umfassend
- ein flexibles Paneel,
- zumindest einen ersten Schwenkarm, welcher um eine erste Schwenkachse schwenkbar an zumindest einer ersten Schwenkarmhalterung angebunden ist,
- zumindest einen zweiten Schwenkarm, der um eine zweite Schwenkachse schwenkbar an zumindest einer zweiten Schwenkarmhalterung angebunden ist,

wobei das Paneel zumindest mit einem Mittenabschnitt zwischen der ersten Schwenkarmhalterung und der zweiten Schwenkarmhalterung angeordnet ist und mit Endbereichen an den mindestens einen ersten Schwenkarm und den mindestens einen zweiten Schwenkarm angebunden ist, wobei das Paneel zwischen dem jeweiligen Endbereich und dem Mittenabschnitt jeweils einen Zwischenabschnitt umfasst, erfindungsgemäß vorgesehen, dass mindestens eine erste Führung und/oder mindestens eine zweite Führung vorgesehen ist/sind, zu der/denen der mindestens eine erste Schwenkarm und/oder der mindestens eine zweite Schwenkarm durch Verschwenken relativ bewegbar sind, wobei jeweils einer der Zwischenabschnitte die erste Führung und/oder die zweite Führung kontaktiert und durch Verschwenken des ersten Schwenkarms und/oder des zweiten Schwenkarms relativ zu dieser bewegbar ist,
wobei die erste Führung und/oder die zweite Führung zur Führung des jeweiligen Zwischenabschnitts entlang einer gekrümmten Trajektorie ausgelegt ist/sind.

Unter "flexibel" ist insbesondere beweglich bzw. biegsam zu verstehen, aber nicht notwendigerweise elastisch, da sich das Paneel bzw. dessen Mittenabschnitt, wie weiter unten noch näher ausgeführt wird, bei der erfindungsgemäßen Lösung entweder überhaupt nicht wölben muss oder, falls eine Wölbung vorhanden ist, diese Wölbung aufgrund von Kurvenfahrt nicht ändern muss. Insbesondere muss sich eine zwischen den Endbereichen gemessene Länge des Paneels nicht ändern bzw. kann im Wesentlichen - d.h. bis auf unvermeidliche, geringfügige Änderungen - konstant sein.

Bei mehreren ersten Schwenkarmen können mehrere erste Schwenkachsen vorgesehen sein, die nicht notwendigerweise zusammenfallen müssen. Vorzugsweise fallen bei mehreren ersten Schwenkarmen deren erste Schwenkachsen zusammen. Analog können bei mehreren zweiten Schwenkarmen mehrere zweite Schwenkachsen vorgesehen sein, die nicht notwendigerweise zusammenfallen müssen. Vorzugsweise fallen bei mehreren zweiten Schwenkarmen deren zweite Schwenkachsen zusammen.

Der erste und/oder der zweite Schwenkarm kann jeweils mehrteilig aufgebaut sein.

Die mindestens eine erste Schwenkarmhalterung dient zur direkten oder indirekten Verbindung des mindestens einen ersten Schwenkarms mit einem der Fahrzeugteile. Analog dient die mindestens eine zweite Schwenkarmhalterung zur direkten oder indirekten Verbindung des mindestens einen zweiten Schwenkarms mit dem anderen der Fahrzeugteile.

Die Anordnung des Mittenabschnitts zwischen der ersten Schwenkarmhalterung und der zweiten Schwenkarmhalterung ist insbesondere bezogen auf eine Blickrichtung normal auf die erste und/oder zweite Schwenkachse gegeben bzw. bei Projektion auf eine Ebene deren Normale normal auf die erste und/oder zweite Schwenkachse steht.

Durch die erste/zweite Führung wird das Paneel bzw. zumindest einer der Zwischenabschnitte des Paneels, genauer Punkte auf dem zumindest einen der Zwischenabschnitte, entlang eines gekrümmten Bewegungspfads bzw. einer gekrümmten Trajektorie geführt, wenn der mindestens eine erste und/oder der mindestens eine zweite Schwenkarm verschwenkt wird/werden. Das Verschwenken der Schwenkarme erfolgt bei Kurvenfahrt, um eine Abstandsänderung zwischen den Fahrzeugteilen zu kompensieren, da der Abstand zwischen den Fahrzeugteilen im Vergleich zur Geradeausfahrt auf der Kurveninnenseite abnimmt und auf der Kurvenaußenseite zunimmt.

Mittels der gekrümmten Trajektorie kann dabei auf der Kurveninnenseite der überschüssige Teil des jeweiligen Zwischenabschnitts aus dem Innenbereich des Übergangs, in dem sich Personen aufhalten können, bzw. vom Bereich, in dem der Mittenabschnitt angeordnet ist, weg geführt werden in einen vom Innenbereich des Übergangs bzw. vom Mittenabschnitt des Paneels abgewandten Bereich. Umgekehrt kann aufgrund der gekrümmten Trajektorie auf der Kurvenaußenseite ein Teil des jeweiligen Zwischenabschnitts aus jenem Bereich, der dem Innenbereich des Übergangs bzw. dem Mittenabschnitt des Paneels abgewandt ist, "hervorgeholt" werden, sodass auch dieser Teil des jeweiligen Zwischenabschnitts in jenem Bereich angeordnet wird, wo auch der Mittenabschnitt angeordnet ist. Eine Kompensation der Abstandsänderung zwischen den Fahrzeugteilen durch eine erhöhte oder verminderte Wölbung des Paneels, insbesondere des Mittenabschnitts des Paneels, kann somit entfallen. Ein Platzverlust im Übergang, wie er bei aus dem Stand der Technik bekannten Lösungen vorkommt, wird somit vermieden.

D.h. eine Verkippung/Verschwenkung der gelenkig miteinander verbundenen Fahrzeugteile zueinander, wie sie bei Kurvenfahrt auftritt, kann problemlos kompensiert werden. Der Vollständigkeit halber ist anzumerken, dass hierdurch auch laterale Versetzungen der Fahrzeugteile zueinander kompensiert werden können.

Indem der mindestens eine erste Schwenkarm und/oder der mindestens eine zweite Schwenkarm relativ zur ersten/zweiten Führung bewegt bzw. verschwenkt werden, entfällt eine entsprechende Schwenkbewegung der ersten/zweiten Führung, und kann die erste/zweite Führung daher unkompliziert und stabil ausgeführt werden.

Das Paneel wird unter Kontaktierung der ersten bzw. zweiten Führung relativ zur ersten/zweiten Führung bewegt. D.h. das Paneel wird insbesondere nicht auf der ersten/zweiten Führung aufgerollt. Entsprechend kann das Paneel, insbesondere im Bereich der Zwischenabschnitte, stabiler ausgeführt werden als bei solchen Lösungen, wo ein Aufrollen stattfindet, da das Paneel im Bereich der Zwischenabschnitte entsprechend weniger stark gekrümmt werden muss. Die konkrete Krümmung des Paneels bzw. der Zwischenabschnitte wird dabei durch die erste/zweite Führung festgelegt, da die erste/zweite Führung die gekrümmte Trajektorie definiert.

Ein grundsätzliches Funktionieren wird bereits mit lediglich der ersten oder zweiten Führung gewährleistet. Für eine optimale Funktion ist sowohl die erste Führung als auch die zweite Führung vorgesehen.

Die mindestens eine erste Führung ist dabei dem mindestens einen ersten Schwenkarm zugeordnet und die mindestens eine zweite Führung dem mindestens einen zweiten Schwenkarm. Hierzu kann die mindestens eine erste Führung im Bereich des mindestens einen ersten Schwenkarms angeordnet sein und kann die mindestens eine zweite Führung im Bereich des mindestens einen zweiten Schwenkarms angeordnet sein.

Grundsätzlich kann die mindestens eine erste bzw. zweite Führung auf unterschiedlichste Art und Weise realisiert werden. Eine besonders einfache, zuverlässige und wartungsarme Lösung ist eine Gleitführung. Entsprechend ist es bei einer bevorzugten Ausführungsform der erfindungsgemäßen Seitenwandverkleidung vorgesehen, dass die Zwischenabschnitte als Gleitabschnitte ausgelegt sind, dass die mindestens eine erste Führung zumindest ein erstes Führungsprofil mit zumindest einer ersten gekrümmten Gleitfläche umfasst und/oder die mindestens eine zweite Führung zumindest ein zweites Führungsprofil mit zumindest einer zweiten gekrümmten Gleitfläche und dass auf der ersten gekrümmten Gleitfläche und/oder der zweiten gekrümmten Gleitfläche jeweils einer der Gleitabschnitte gleitbar aufliegt, um beim Verschwenken des mindestens einen ersten Schwenkarms und/oder des mindestens einen zweiten Schwenkarms auf der jeweiligen gekrümmten Gleitfläche abzugleiten. In diesem Sinn wirkt der mindestens eine erste Schwenkarm mit dem mindestens einen ersten Führungsprofil bzw. mit der mindestens einen ersten gekrümmten Gleitfläche zusammen. Analog wirkt in diesem Sinn der mindestens eine zweite Schwenkarm mit dem mindestens einen zweiten Führungsprofil bzw. mit der mindestens einen zweiten gekrümmten Gleitfläche zusammen. Gemäß dem oben Gesagten bedeutet das, dass das erste Führungsprofil dem mindestens einen ersten Schwenkarm zugeordnet ist und das zweite Führungsprofil dem mindestens einen zweiten Schwenkarm.

Die jeweilige gekrümmte Gleitfläche definiert dabei die gekrümmte Trajektorie für den jeweiligen Gleitabschnitt. Der jeweilige Zwischenabschnitt bzw. Gleitabschnitt liegt dabei klarerweise nicht stets vollständig auf der jeweiligen Gleitfläche auf, sondern typischerweise zumindest abschnittsweise, wobei die Größe des auf der Gleitfläche aufliegenden Abschnitts variiert, je nachdem ob sich die Seitenwandverkleidung gerade auf einer Kurveninnenseite (mit einer entsprechend großen Größe des aufliegenden Abschnitts) oder einer Kurvenaußenseite (mit einer entsprechend kleinen Größe des aufliegenden Abschnitts) befindet.

Das erste bzw. zweite Führungsprofil kann mehrteilig aufgebaut sein, wobei die einzelnen Teile parallel zur bzw. entlang der jeweiligen Schwenkachse angeordnet und auch voneinander beabstandet sein können.

Um besonders gute Gleiteigenschaften einfach und kostengünstig zu realisieren, kann vorgesehen sein, dass am mindestens einen ersten Führungsprofil und/oder am mindestens einen zweiten Führungsprofil mindestens eine Gleitfolie aus Kunststoff zur Ausbildung der mindestens einen ersten gekrümmten Gleitfläche und/oder der mindestens einen zweiten gekrümmten Gleitfläche vorgesehen sind. Geeignete Folienmaterialien sind an sich bekannt und können Kunststoff wie z.B. Polytetrafluorethylen umfassen. Vorzugsweise sind die Folienmaterialien dabei auf das Material des Paneels, insbesondere der Zwischenabschnitte, abgestimmt.

Alternativ oder zusätzlich zur Gleitführung ist bei einer bevorzugten Ausführungsform der erfindungsgemäßen Seitenwandverkleidung vorgesehen, dass die mindestens eine erste Führung zumindest einen ersten Wälzkörper umfasst und/oder die mindestens eine zweite Führung zumindest einen zweiten Wälzkörper, dass auf dem ersten Wälzkörper und/oder dem zweiten Wälzkörper jeweils einer der Zwischenabschnitte aufliegt, um ein Abgleiten des jeweiligen Wälzkörpers am jeweiligen Zwischenabschnitt beim Verschwenken des mindestens einen ersten Schwenkarms und/oder des mindestens einen zweiten Schwenkarms zu gewährleisten. Auf diese Weise lassen sich äußerst geringe Reibungswiderstände zwischen der jeweiligen Führung und dem jeweiligen Zwischenabschnitt realisieren. Geeignete Wälzkörper sind an sich bekannt und können beispielsweise walzenförmig oder kugelförmig ausgebildet sein.

Im Falle einer Kombination mit der oben geschilderten Gleitführung können die Wälzkörper auch in den Gleitflächen oder im Bereich der Gleitflächen angeordnet sein, sodass die Zwischenabschnitte teils auf den Gleitflächen und teils auf den Wälzkörpern aufliegen können.

Bei einer bevorzugten Ausführungsform der erfindungsgemäßen Seitenwandverkleidung ist vorgesehen, dass Spannmittel vorgesehen sind, um den mindestens einen ersten Schwenkarm vorzuspannen und von der mindestens einen ersten Führung weg zu schwenken und/oder um den mindestens einen zweiten Schwenkarm vorzuspannen und von der mindestens einen zweiten Führung weg zu schwenken, wobei die Spannmittel bevorzugt mindestens eine Feder, besonders bevorzugt mindestens eine Torsionsfeder, umfassen. Entsprechend wird der jeweilige Schwenkarm vorgespannt und das mit den Schwenkarmen verbundene Paneel stets, d.h. unabhängig von einer ggf. gerade vorliegenden Kurvenfahrt, gespannt gehalten. Auf der Kurveninnenseite stellen die Spannmittel sicher, dass "überschüssige" (Zwischen-)Abschnitte des Paneels eingezogen werden. Auf der Kurvenaußenseite erlauben die Spannmittel, dass benötigte (Zwischen-)Abschnitte des Paneels freigegeben werden, indem über das Paneel die Schwenkarme gegen die Kraftwirkung der Spannmittel auf die jeweilige Führung zu geschwenkt werden.

Im Falle einer ersten und/oder zweiten Führung mit Führungsprofil und Gleitfläche, wird der jeweilige Schwenkarm entsprechend vom jeweiligen Führungsprofil bzw. von der jeweiligen Gleitfläche weg weisend vorgespannt.

Im Falle einer ersten und/oder zweiten Führung mit mindestens einem ersten und/oder zweiten Wälzkörper, wird der jeweilige Schwenkarm entsprechend vom jeweiligen Wälzkörper weg weisend vorgespannt.

Die Feder bzw. Torsionsfeder erweist sich als einfaches und kostengünstiges Spannmittel. Theoretisch sind aber natürlich auch andere Ausführungsvarianten denkbar, beispielsweise mit einer elektromotorischen Vorspannung der Schwenkarme. Der entsprechend vorgesehene mindestens eine Elektromotor kann dabei mittels einer elektronischen Steuereinheit kontrolliert werden kann, welche beispielswese die Schwenkarmposition durch Regelung einer definierten Spannung des Paneels steuert.

Bei einer bevorzugten Ausführungsform der erfindungsgemäßen Seitenwandverkleidung ist vorgesehen, dass das Paneel mit seinem jeweiligen Endbereich beweglich, vorzugsweise verschieblich und/oder verdrehbar, an den mindestens einen ersten Schwenkarm und/oder an den mindestens einen zweiten Schwenkarm angebunden ist. D.h. der eine der beiden Endbereiche des Paneels kann am mindestens einen ersten Schwenkarm beweglich angebunden sein, und alternativ oder zusätzlich kann der andere der beiden Endbereiche des Paneels am mindestens einen zweiten Schwenkarm beweglich angebunden sein. Durch die bewegliche Anbindung kann ein Höhenversatz der Fahrzeugteile zueinander ausgeglichen werden.

Eine Verdrehbarkeit kann dabei ausreichend sein, insbesondere wenn die Spannmittel der Schwenkarme dafür sorgen, dass die unterschiedlichen Schwenkarme unterschiedlich stark verschwenkt werden, sodass das Paneel unterschiedlich stark an unterschiedlichen Höhen bzw. von übereinander angeordneten Schwenkarmen "verschoben" wird.

Besonders bevorzugt ist an sämtlichen ersten und zweiten Schwenkarmen eine Beweglichkeit der Anbindung des Paneels im Sinne einer Verdrehbarkeit gewährleistet, wobei jeweils eine Drehung um eine auf die jeweilige Schwenkachse des jeweiligen Schwenkarms normal stehende Rotationsachse ermöglicht ist. Zusätzlich kann bei jenem ersten und jenem zweiten Schwenkarm, die beide zuunterst oder zuoberst - bzw. entlang einer Schwenkachse der ersten/zweiten Schwenkarme gesehen zuvorderst oder zuletzt - angeordnet sind, jeweils eine Anbindungen zum Paneel vorgesehen sein, die eine lineare Relativbewegung zwischen Paneel und Schwenkarm in vertikaler Richtung bzw. in Richtung parallel zur Schwenkachse des Schwenkarms erlaubt. Auf diese Art und Weise lässt sich ein optimaler "Höhenausgleich" für das Paneel bei Höhenversatz der Fahrzeugteile realisieren.

Bei einer bevorzugten Ausführungsform der erfindungsgemäßen Seitenwandverkleidung ist vorgesehen, dass die mindestens eine erste Führung mit der mindestens einen ersten Schwenkarmhalterung und/oder die mindestens eine zweite Führung mit der mindestens einen zweiten Schwenkarmhalterung im Wesentlichen starr verbunden sind. Eine besonders stabile und einfache Konstruktion ist die Folge. Insbesondere ist bei dieser Ausführungsform keine drehbare Lagerung zwischen der ersten Führung und der ersten Schwenkarmhalterung bzw. zwischen der zweiten Führung und der zweiten Schwenkarmhalterung vorgesehen. Es ist dabei allerdings natürlich nicht ausgeschlossen, dass die jeweilige Verbindung zwischen der ersten/zweiten Schwenkarmhalterung und der ersten/zweiten Führung eine gewisse Elastizität aufweist, die durch entsprechende Materialwahl auch gezielt herbeigeführt/eingestellt sein kann.

Bei einer bevorzugten Ausführungsform der erfindungsgemäßen Seitenwandverkleidung ist vorgesehen, dass die mindestens eine erste Schwenkarmhalterung mit der mindestens einen zweiten Schwenkarmhalterung über mindestens ein Scherengitter verbunden ist, wobei das Scherengitter vorzugsweise drehbar an den Schwenkarmhalterungen angebunden ist. Mittels des Scherengitters wird einerseits sichergestellt, dass die mindestens eine erste Schwenkarmhalterung und die mindestens eine zweite Schwenkarmhalterung eine Anordnung zueinander aufweisen, die in einem gewissen Rahmen wohldefiniert ist. Gleichzeitig wird ein gewisser Bewegungsspielraum der ersten/zweiten Schwenkarmhalterungen zueinander bereitgestellt, um den Relativbewegungen der Fahrzeugteile Rechnung zu tragen.

Mittels der drehbaren Anbindung des Scherengitters an die erste/zweite Schwenkarmhalterung kann besagter Bewegungsspielraum insbesondere für die Berücksichtigung eines Höhenversatzes der Fahrzeugteile zueinander besonders gut ausgelegt werden.

Bei einer besonders bevorzugten Ausführungsform der erfindungsgemäßen Seitenwandverkleidung ist vorgesehen, dass das Paneel, insbesondere mit seinem Mittenabschnitt, beweglich mit dem mindestens einen Scherengitter verbunden ist. Hierdurch wird einerseits eine exzellente Zentrierung des Paneels mittels des Scherengitters erreicht. Andererseits kann das Scherengitter das Paneel gegen Kräfte abstützen, die normal auf eine Oberfläche des Paneels, insbesondere des Mittenabschnitts, wirken, wobei diese Kräfte typischerweise einen überwiegenden Richtungsanteil in horizontaler Richtung aufweisen.

Durch die bewegliche Anbindung wird gleichzeitig eine Relativbewegung zwischen Paneel und Scherengitter in einem gewissen Ausmaß zugelassen, um Relativbewegungen der Fahrzeugteile zueinander optimal Rechnung tragen zu können.

Die bewegliche Anbindung kann auf unterschiedliche Art und Weise erfolgen, beispielsweise mittels elastischer Elemente. Bei einer besonders bevorzugten Ausführungsform der erfindungsgemäßen Seitenwandverkleidung ist vorgesehen, dass zur beweglichen Verbindung des Paneels mit dem mindestens einen Scherengitter mindestens ein Hebelmechanismus vorgesehen ist, wobei der Hebelmechanismus vorzugsweise mindestens einen Drehhebel umfasst. Mittels des Hebelmechanismus' kann sichergestellt werden, dass im Wesentlichen nur wohldefinierte Relativbewegungen zwischen Paneel und Scherengitter auftreten. Der Hebelmechanismus kann dabei grundsätzlich mit festen, beweglichen, insbesondere drehbeweglichen, oder elastischen Hebeln ausgestattet sein.

Bei einer bevorzugten Ausführungsform der erfindungsgemäßen Seitenwandverkleidung ist vorgesehen, dass mehrere, vorzugsweise zwei, erste Schwenkarme und/oder mehrere, vorzugsweise zwei, zweite Schwenkarme vorgesehen sind. Die ersten Schwenkarme bzw. die zweiten Schwenkarme sind dabei typischerweise übereinander bzw. "über die Höhe verteilt" angeordnet. Mit anderen Worten sind die ersten Schwenkarme bzw. die zweiten Schwenkarme typischerweise parallel zur ersten und/oder zweiten Schwenkachse gesehen hintereinander angeordnet.

Selbstverständlich ist auch eine andere Anzahl an ersten/zweiten Schwenkarmen möglich, z.B. drei erste Schwenkarme und drei zweite Schwenkarme. Weiters ist auch eine unterschiedliche Anzahl von ersten und zweiten Schwenkarmen denkbar.

Bei einer bevorzugten Ausführungsform der erfindungsgemäßen Seitenwandverkleidung ist vorgesehen, dass das Paneel aus glasfaserverstärktem Kunststoff gefertigt ist. Einerseits kann hierdurch eine hinreichend große Stabilität des Paneels gewährleistet werden. Andererseits kann das Paneel auch hinreichend flexibel bzw. beweglich ausgelegt werden, sodass die Führung der Zwischenabschnitte entlang gekrümmter Trajektorien mittels der ersten bzw. zweiten Führung problemlos möglich ist.

Bei einer bevorzugten Ausführungsform der erfindungsgemäßen Seitenwandverkleidung ist vorgesehen, dass eine Dicke des Mittenabschnitts des Paneels größer ist als eine Dicke des jeweiligen Zwischenabschnitts. D.h. die Dicken der Zwischenabschnitte sind kleiner als die Dicke des Mittenabschnitts, aber nicht notwendigerweise gleich. Durch die relativ geringen Dicken der Zwischenabschnitte kann für unterschiedlichste Materialien, d.h. nicht nur für glasfaserverstärkten Kunststoff (GFK), eine hinreichende Flexibilität der Zwischenabschnitte sichergestellt werden, wobei gleichzeitig eine hohe Stabilität im Mittenabschnitt realisiert wird. Beispielsweise sind Ausführungsvarianten, insbesondere mit GFK als Material des Paneels, denkbar, bei denen die Dicke der Zwischenabschnitte im Bereich von 1 mm bis 2 mm, vorzugsweise bei ca. 1,5 mm, liegt und die Dicke des Mittenabschnitts im Bereich von 3 mm bis 6 mm, vorzugsweise bei ca. 3,5 mm.

Analog zum oben Gesagten ist erfindungsgemäß ein System vorgesehen, das System umfassend zwei gelenkig miteinander verbundene Fahrzeugteile sowie einen zwischen den Fahrzeugteilen angeordneten Übergang, wobei an der Innenseite des Übergangs eine erfindungsgemäße Seitenwandverkleidung angebracht ist, wobei der zumindest eine erste Schwenkarm über die zumindest eine erste Schwenkarmhalterung mit einem der Fahrzeugteile direkt oder indirekt verbunden ist und wobei der zumindest eine zweite Schwenkarm über die zumindest eine zweite Schwenkarmhalterung mit dem anderen Fahrzeugteil direkt oder indirekt verbunden ist.

Bei einer bevorzugten Ausführungsform des erfindungsgemäßen Systems ist vorgesehen, dass an dem einen der beiden Fahrzeugteile zumindest eine mit diesem starr verbundene erste Aufhängung für die zumindest eine erste Schwenkarmhalterung angeordnet ist und dass an dem anderen der beiden Fahrzeugteile zumindest eine mit diesem starr verbundene zweite Aufhängung für die zumindest eine zweite Schwenkarmhalterung angeordnet ist. Eine besonders stabile und technisch einfach herzustellende Anordnung der Schwenkarmhalterungen relativ zu den Fahrzeugteilen ist hierdurch gewährleistet.

Bei einer besonders bevorzugten Ausführungsform des erfindungsgemäßen Systems ist vorgesehen, dass die mindestens eine erste Aufhängung eine Verdrehsicherung und/oder einen Schnellverschluss für die zumindest eine erste Schwenkarmhalterung aufweist und/oder dass die mindestens eine zweite Aufhängung eine Verdrehsicherung und/oder einen Schnellverschluss für die zumindest eine zweite Schwenkarmhalterung aufweist. D.h. die Verbindung der jeweiligen Schwenkarmhalterung zum jeweiligen Fahrzeugteil ist verdrehgesichert und fest, wobei die jeweilige Verdrehsicherung in an sich bekannter Weise realisiert sein kann. Der Schnellverschluss erlaubt ein rasches Ein- und Ausbauen der jeweiligen Schwenkarmhalterung, wobei der jeweilige Schnellverschluss in an sich bekannter Weise, beispielsweise nach Art eines Bajonettverschlusses, realisiert sein kann.

### KURZE BESCHREIBUNG DER FIGUREN

Die Erfindung wird nun anhand von Ausführungsbeispielen näher erläutert. Die Zeichnungen sind beispielhaft und sollen den Erfindungsgedanken zwar darlegen, ihn aber keinesfalls einengen oder gar abschließend wiedergeben.

Dabei zeigt:
- Fig. 1: eine schematische Frontansicht eines erfindungsgemäßen Systems bzw. einer erfindungsgemäßen Seitenwandverkleidung für die Innenseite eines Übergangs zwischen zwei gelenkig miteinander verbundenen Fahrzeugteilen, wobei die Fahrzeugteile parallel zueinander und nicht zueinander versetzt angeordnet sind und wobei aus Klarheitsgründen weitere Elemente des Übergangs (wie z.B. ein Falten- oder Wellenbalg, ein Bodenelement oder ein Deckenelement) nicht dargestellt sind
- Fig. 2: eine Rückansicht der Seitenwandverkleidung aus Fig. 1
- Fig. 3: eine Aufsicht der Seitenwandverkleidung aus Fig. 1 von oben, wobei aus Klarheitsgründen eine obere Abdeckung und eine untere Abdeckung nicht dargestellt sind
- Fig. 4: eine Aufsicht der Seitenwandverkleidung aus Fig. 1 analog zu Fig. 3, bei einem minimalen Abstand der (aus Klarheitsgründen nicht dargestellten) Fahrzeugteile im Bereich der Seitenwandverkleidung, welcher minimale Abstand sich bei Kurvenfahrt auf der Kurveninnenseite einstellen kann
- Fig. 5: eine Aufsicht der Seitenwandverkleidung aus Fig. 1 analog zu Fig. 3, bei einem maximalen Abstand der (aus Klarheitsgründen nicht dargestellten) Fahrzeugteile im Bereich der Seitenwandverkleidung, welcher maximale Abstand sich bei Kurvenfahrt und/oder Querversatz auf der Kurvenaußenseite einstellen kann
- Fig. 6: eine Rückansicht der Seitenwandverkleidung aus Fig. 1, bei einem Höhenversatz der (aus Klarheitsgründen nicht dargestellten) Fahrzeugteile
- Fig. 7: eine Seitenansicht der Seitenwandverkleidung aus Fig. 6
- Fig. 8: ein vergrößertes Detail der Fig. 3
- Fig. 9: eine weitere Ausführungsform der erfindungsgemäßen Seitenwandverkleidung mit Führungen, welche Wälzkörper umfassen, in einer Ansicht analog zu Fig. 3, wobei aus Klarheitsgründen erste und zweite Aufhängungen nicht dargestellt sind

### WEGE ZUR AUSFÜHRUNG DER ERFINDUNG

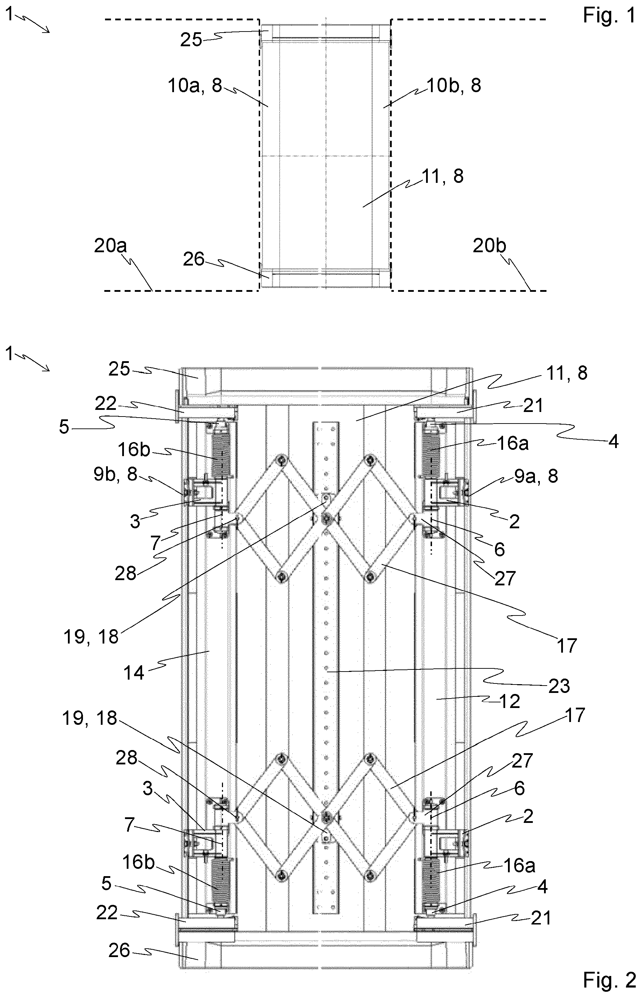

Fig. 1 zeigt eine schematische Frontansicht eines erfindungsgemäßen Systems bzw. einer erfindungsgemäßen Seitenwandverkleidung 1 für die Innenseite eines Übergangs zwischen zwei gelenkig miteinander verbundenen Fahrzeugteilen 20a, 20b, wobei die Fahrzeugteile 20a, 20b parallel zueinander und nicht zueinander versetzt angeordnet sind und wobei aus Klarheitsgründen weitere Elemente des Übergangs (wie z.B. ein Falten- oder Wellenbalg, ein Bodenelement oder ein Deckenelement) nicht dargestellt sind. Die Seitenwandverkleidung 1 umfasst ein flexibles Paneel 8, das in den dargestellten Ausführungsbeispielen aus glasfaserverstärktem Kunststoff (GFK) gefertigt ist, wodurch einerseits eine hinreichend große Stabilität des Paneels 8 gewährleistet ist und andererseits das Paneel 8 auch hinreichend flexibel bzw. beweglich ausgelegt werden kann.

In der Frontansicht der Fig. 1 ist ein Mittenabschnitt 11 des Paneels 8 erkennbar, der zwischen zwei Zwischenabschnitten angeordnet ist, wobei die Zwischenabschnitte in den dargestellten Ausführungsbeispielen als Gleitabschnitte 10a, 10b ausgelegt sind. Der Gleitabschnitt 10a ist wiederum zwischen einem Endbereich 9a des Paneels 8 und dem Mittenabschnitt 11 angeordnet. Der Gleitabschnitt 10b ist entsprechend zwischen einem Endbereich 9b des Paneels 8 und dem Mittenabschnitt 11 angeordnet.

Die Seitenwandverkleidung 1 umfasst in den dargestellten Ausführungsformen weiters zwei erste Schwenkarme 2, welche jeweils um eine erste Schwenkachse 6 schwenkbar an jeweils einer ersten Schwenkarmhalterung 4 angebunden sind, vgl. die Rückansicht der Fig. 2. Die ersten Schwenkarme 2 bzw. die ersten Schwenkarmhalterungen 4 sind so übereinander angeordnet, dass die beiden ersten Schwenkachsen 6 zusammenfallen, wobei die ersten Schwenkarme 2 bzw. die ersten Schwenkarmhalterungen 4 einen Abstand zueinander aufweisen, der parallel zu den ersten Schwenkachsen 6 gemessen ist. Über die ersten Schwenkarmhalterungen 4 sind die ersten Schwenkarme 2 mit dem Fahrzeugteil 20a (indirekt) verbunden, wobei die ersten Schwenkarmhalterungen 4 hierzu mittels ersten Aufhängungen 21 am Fahrzeugteil 20a befestigt sind. Die ersten Aufhängungen 21 sind dabei starr mit dem Fahrzeugteil 20a verbunden.

Analog umfasst die Seitenwandverkleidung 1 in den dargestellten Ausführungsformen zwei zweite Schwenkarme 3, welche jeweils um eine zweite Schwenkachse 7 schwenkbar an jeweils einer zweiten Schwenkarmhalterung 5 angebunden sind, vgl. die Rückansicht der Fig. 2. Die zweiten Schwenkarme 3 bzw. die zweiten Schwenkarmhalterungen 5 sind so übereinander angeordnet, dass die beiden zweiten Schwenkachsen 7 zusammenfallen, wobei die zweiten Schwenkarme 3 bzw. die zweiten Schwenkarmhalterungen 5 einen Abstand zueinander aufweisen, der parallel zu den zweiten Schwenkachsen 7 gemessen ist. Über die zweiten Schwenkarmhalterungen 5 sind die zweiten Schwenkarme 3 mit dem Fahrzeugteil 20b (indirekt) verbunden, wobei die zweiten Schwenkarmhalterungen 5 hierzu mittels zweiten Aufhängungen 22 am Fahrzeugteil 20b befestigt sind. Die zweiten Aufhängungen 22 sind dabei starr mit dem Fahrzeugteil 20b verbunden.

Eine Deckenschürze 25 schließt die Seitenwandverkleidung 1 nach oben hin ab, und eine Bodenschürze 26 schließt die Seitenwandverkleidung 1 nach unten hin ab. Entsprechend sind sämtliche erste und zweite Schwenkarme 2,3 sowie sämtliche erste und zweite Aufhängungen 21, 22 zwischen der Deckenschürze 25 und der Bodenschürze 26 angeordnet.

Das Paneel 8 ist so angeordnet, dass bei Blickrichtung normal auf eine Ebene, in welcher die ersten Schwenkachsen 6 und zweiten Schwenkachsen 7 liegen, zumindest der Mittenabschnitt 11 zwischen den ersten Schwenkarmhalterungen 4 und den zweiten Schwenkarmhalterungen 5 angeordnet ist.

Mit seinem Endbereich 9a ist das Paneel 8 an den ersten Schwenkarmen 2 angebunden. Analog ist das Paneel 8 mit seinem Endbereich 9b an den zweiten Schwenkarmen 3 angebunden.

Entsprechend kann das Paneel 8 durch Verschwenken der ersten und zweiten Schwenkarme 2, 3 bewegt werden.

Hierfür ist in den dargestellten Ausführungsbeispielen eine erste Führung vorgesehen, die ein erstes Führungsprofil 12 umfasst, wobei die ersten Schwenkarme 2 durch Verschwenken relativ zur ersten Führung bzw. zum Führungsprofil 12 bewegbar sind. Ebenso ist in den dargestellten Ausführungsbeispielen eine zweite Führung vorgesehen, die ein zweites Führungsprofil 14 umfasst, wobei die zweiten Schwenkarme 3 durch Verschwenken relativ zur zweiten Führung bzw. zum zweiten Führungsprofil 14 bewegbar sind.

Das erste Führungsprofil 12 ist dabei mit den ersten Schwenkarmhalterungen 4 im Wesentlichen starr verbunden. Ebenso ist das zweite Führungsprofil 14 mit den zweiten Schwenkarmhalterungen 5 im Wesentlichen starr verbunden.

Der Gleitabschnitt 10a kontaktiert die erste Führung und wird beim Verschwenken der ersten Schwenkarme 2 relativ zur ersten Führung und von dieser geführt bewegt. Dabei ist die erste Führung so ausgelegt, dass der Gleitabschnitt 10a entlang eines gekrümmten Bewegungspfads bzw. einer gekrümmten Trajektorie bewegt wird. Analog kontaktiert der Gleitabschnitt 10b die zweite Führung und wird beim Verschwenken der zweiten Schwenkarme 3 relativ zur zweiten Führung und von dieser geführt bewegt. Dabei ist die zweite Führung so ausgelegt, dass der Gleitabschnitt 10b entlang eines gekrümmten Bewegungspfads bzw. einer gekrümmten Trajektorie bewegt wird.

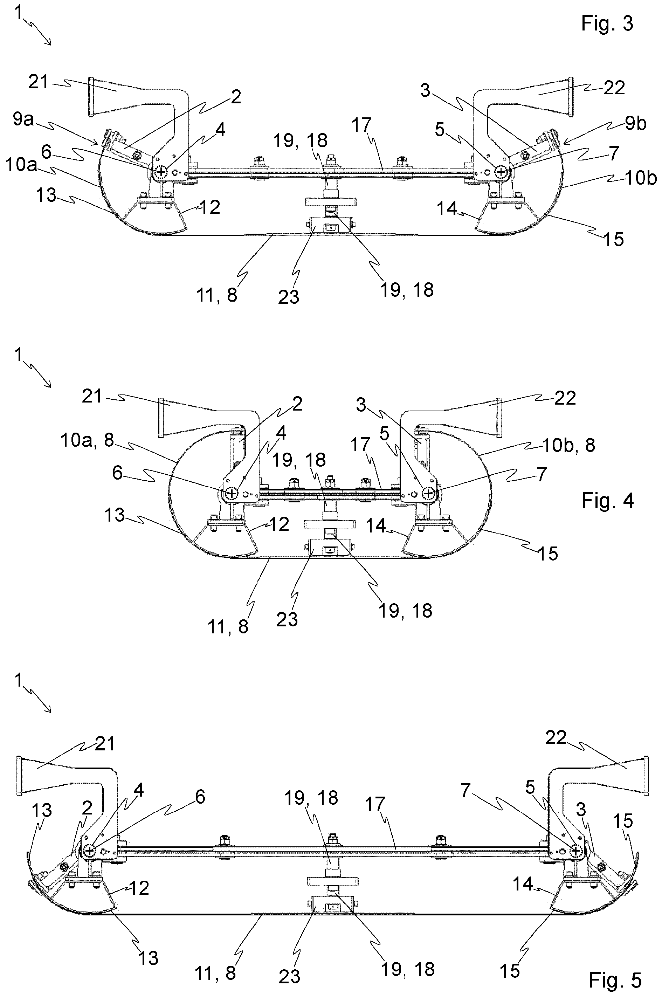

Bei der in Fig. 3 dargestellten Ausführungsform weist das erste Führungsprofil 12 eine erste gekrümmte Gleitfläche 13 auf, auf der der Gleitabschnitt 10a gleitbar aufliegt und beim Verschwenken der ersten Schwenkarme 2 abgleitet. Analog weist das zweite Führungsprofil 14 eine zweite gekrümmte Gleitfläche 15 auf, auf der der Gleitabschnitt 10b gleitbar aufliegt und beim Verschwenken der zweiten Schwenkarme 3 abgleitet.

Fig. 3 zeigt eine Situation, wie sie bei einem durchschnittlichen Abstand zwischen den Fahrzeugteilen 20a, 20b, typischerweise bei einer Geradeausfahrt, auftritt. Entsprechend befinden sich die ersten und zweiten Schwenkarme 2, 3 in einer mittleren Position.

In den dargestellten Ausführungsbeispielen sind Spannmittel in Form von Torsionsfedern 16a vorgesehen (vgl. Fig. 2), um die ersten Schwenkarme 2 vorzugspannen und vom ersten Führungsprofil 12 bzw. vom Innenraum des Übergangs weg zu schwenken. Analog sind in den dargestellten Ausführungsbeispielen Spannmittel in Form von Torsionsfedern 16b vorgesehen (vgl. Fig. 2), um die zweiten Schwenkarme 3 vorzugspannen und vom zweiten Führungsprofil 14 bzw. vom Innenraum des Übergangs weg zu schwenken.

Das Paneel 8 ist zwar flexibel im Sinne von beweglich und biegbar, aber wenig bis gar nicht elastisch (selbstverständlich ist in der Praxis stets eine gewisse Elastizität aufgrund des konkret vorliegenden Materials gegeben, die mathematisch ungleich null ist), sodass eine zwischen den Endbereichen 9a, 9b gemessene Länge des Paneels 8 im Wesentlichen unverändert bleibt. Entsprechend werden die ersten und zweiten Schwenkarme 2, 3 mittels der Torsionsfedern 16a, 16b bei der in Fig. 3 gezeigten Situation nicht maximal verschwenkt, sondern nur bis zu jener mittleren Position, die sich aufgrund des Abstands der Fahrzeugteile 20a, 20b einerseits und der Länge des Paneels 8 andererseits einstellt. Ein Teil der Gleitabschnitte 10a, 10b ist dabei aufgrund der gekrümmten Gleitflächen 13, 15 vom Innenraum des Übergangs weg geführt.

Nähern sich die Fahrzeugteile 20a, 20b einander an, wie dies bei Kurvenfahrt auf der Kurveninnenseite geschieht, so werden die ersten und zweiten Schwenkarme 2, 3 durch die Torsionsfedern 16a, 16b weiter verschwenkt, da die Länge des Paneels 8 im Wesentlichen unverändert bleibt. Entsprechend ist ein größerer Teil der Gleitabschnitte 10a, 10b aufgrund der gekrümmten Gleitflächen 13, 15 vom Innenraum des Übergangs weg geführt. Fig. 4 zeigt die ersten und zweiten Schwenkarme 2, 3 jeweils in einer maximal verschwenkten Position, wie sie bei einem minimalen Abstand zwischen den Fahrzeugteilen 20a, 20b auftritt. Entsprechend ist ein maximaler Teil der Gleitabschnitte 10a, 10b aufgrund der gekrümmten Gleitflächen 13, 15 vom Innenraum des Übergangs weg geführt.

Entfernen sich die Fahrzeugteile 20a, 20b voneinander, wie dies bei Kurvenfahrt auf der Kurvenaußenseite geschieht, so werden die ersten und zweiten Schwenkarme 2, 3 gegen die Kraft der Torsionsfedern 16a, 16b und in Richtung des ersten und zweiten Führungsprofils 12, 14 bzw. zum Innenraum des Übergangs hin verschwenkt, da die Länge des Paneels 8 im Wesentlichen unverändert bleibt. Entsprechend ist ein kleinerer Teil der Gleitabschnitte 10a, 10b aufgrund der gekrümmten Gleitflächen 13, 15 vom Innenraum des Übergangs weg geführt. Fig. 5 zeigt die ersten und zweiten Schwenkarme 2, 3 jeweils in einer minimal verschwenkten (oder "unverschwenkten") Position, wie sie bei einem maximalen Abstand zwischen den Fahrzeugteilen 20a, 20b auftritt. Entsprechend ist ein minimaler Teil der Gleitabschnitte 10a, 10b aufgrund der gekrümmten Gleitflächen 13, 15 vom Innenraum des Übergangs weg geführt.

Hierzu ist noch anzumerken, dass im Ausführungsbeispiel, welches in Fig. 5 gezeigt ist, Schlitze bzw. Ausnehmungen im ersten Führungsprofil 12 bzw. in der ersten Gleitfläche 13 vorgesehen sind, um die ersten Schwenkarme 2 in der minimal verschwenkten Position aufzunehmen. Analog sind Schlitze bzw. Ausnehmungen im zweiten Führungsprofil 14 bzw. in der zweiten Gleitfläche 15 vorgesehen, um die zweiten Schwenkarme 3 in der minimal verschwenkten Position aufzunehmen.

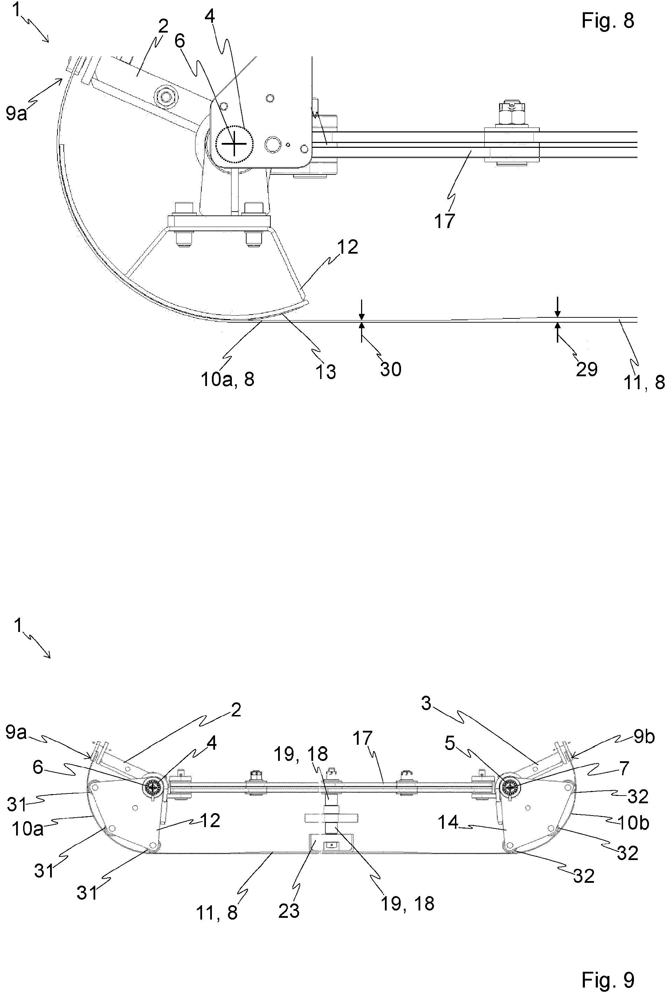

Wie in der vergrößerten Detailansicht der Fig. 8 erkennbar ist, ist es beim in Fig. 3 dargestellten Ausführungsbeispiel vorgesehen, dass eine Dicke 29 des Mittenabschnitts 11 des Paneels 8 größer ist als eine Dicke 30 des Gleitabschnitts 10a sowie des Gleitabschnitts 10b. Konkret beträgt die Dicke 29 des Mittenabschnitts 11 ca. 3,5 mm und die Dicke 30 der Gleitabschnitte 10a, 10b jeweils ca. 1,5 mm. Dies hat eine erhöhte Beweglichkeit er Gleitabschnitte 10a, 10b zur Folge, was die Führung der Gleitabschnitte 10a, 10b entlang gekrümmter Trajektorien erleichtert. Gleichzeitig kann eine vergleichsweise hohe Stabilität des Mittenabschnitts 11 sichergestellt werden.

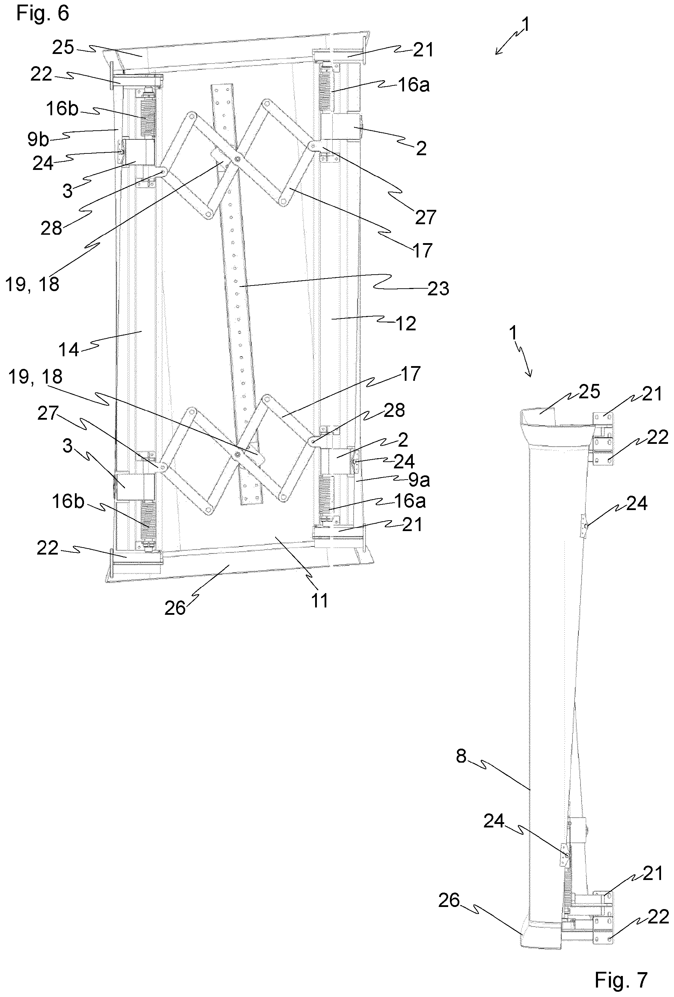

Fig. 6 und Fig. 7 illustrieren eine Situation, wie sie bei einem Höhenversatz der Fahrzeugteile 20a, 20b zueinander auftritt. Um einen solchen Höhenversatz entsprechend kompensieren zu können, ist in den dargestellten Ausführungsbeispielen das Paneel 8 mit seinem Endbereich 9a verdrehbar an den ersten Schwenkarmen 2 angebunden und ist das Paneel 8 mit seinem Endbereich 9b verdrehbar an den zweiten Schwenkarmen 3 angebunden. Die Verdrehbarkeit wird dabei jeweils mittels an sich bekannter Drehverbindungen 24 sichergestellt. D.h. es ist an sämtlichen ersten und zweiten Schwenkarmen 2, 3 eine Beweglichkeit der Anbindung des Paneels 8 im Sinne einer Verdrehbarkeit gewährleistet, wobei jeweils eine Drehung um eine auf die Schwenkachse 6, 7 des jeweiligen Schwenkarms 2, 3 normal stehende Rotationsachse ermöglicht ist. Für einen optimalen Höhenausgleich ist bei den dargestellten Ausführungsbeispielen zusätzlich vorgesehen, dass bei jenem ersten Schwenkarm 2 und jenem zweiten Schwenkarm 3, die beide zuoberst angeordnet sind, jeweils eine Anbindung zum Paneel 8 bzw. zum jeweiligen Endbereich 9a, 9b vorgesehen ist, die eine lineare Relativbewegung zwischen Paneel 8 und Schwenkarm 2, 3 in vertikaler Richtung bzw. in Richtung parallel zur Schwenkachse 6, 7 des Schwenkarms 2, 3 erlaubt.

Bei den dargestellten Ausführungsbeispielen ist jeweils eine erste Schwenkarmhalterung 4 mit einer gegenüberliegenden zweiten Schwenkarmhalterung 5 durch ein Scherengitter 17 verbunden, vgl. Fig. 2. Die zwei Scherengitter 17 sind dabei mittels Drehlager 28 jeweils verdrehbar an den Schwenkarmhalterungen 4, 5 angebunden, um einem Höhenversatz der Fahrzeugteile 20a, 20b zueinander Rechnung tragen zu können, vgl. Fig. 6. Die Drehlager 28 sind wiederum auf Dreharmen 27 montiert, die um die Schwenkachsen 6, 7 drehbar mit den Schwenkarmhalterungen 4, 5 verbunden sind, sodass auch bei Verkippungen/Verschwenkungen der Fahrzeugteile 20a, 20b zueinander, wie sie bei Kurvenfahrt auftreten, oder bei lateralen Versetzungen der Fahrzeugteile 20a, 20b zueinander stets eine optimale Verbindung zwischen den Schwenkarmhalterungen 4, 5 mittels der Scherengitter 17 gewährleistet ist.

Die Scherengitter 17 legen die Anordnung der über diese verbundenen Schwenkarmhalterungen 4, 5 relativ zueinander in einem gewissen, definierten räumlichen Bereich fest.

Darüberhinaus ist bei den dargestellten Ausführungsbeispielen das Paneel 8 mit seinem Mittenabschnitt 11 beweglich mit den Scherengittern 17 verbunden, wobei das Paneel 8 durch die Scherengitter 17 zentriert und gegen horizontal einwirkende Kräfte abgestützt wird. Durch die bewegliche Anbindung wird gleichzeitig eine Relativbewegung zwischen Paneel 8 und den Scherengittern 17 in einem gewissen Ausmaß zugelassen, um Relativbewegungen der Fahrzeugteile 20a, 20b zueinander optimal Rechnung tragen zu können.

Die besagten beweglichen Anbindungen zwischen Paneel 8 und den Scherengittern 17 sind mittels Hebelmechanismen 18 mit Drehhebeln 19 verwirklicht, sodass nur wohldefinierte Relativbewegungen zwischen dem Paneel 8 und den Scherengittern 17 auftreten können.

Um den jeweiligen Hebelmechanismus 18 mit dem Mittenabschnitt 11 optimal verbinden zu können, ist am Mittenabschnitt 11 eine im Wesentlichen starre Strebe 23 befestigt, zB. verklebt, an welcher der jeweilige Hebelmechanismus 18 z.B. verschraubt werden kann. Die Latte 23 kann beispielsweise aus einem Kunststoff oder aus Metall, insbesondere Leichtmetall, gefertigt sein.

Fig. 9 zeigt eine weitere Ausführungsform des erfindungsgemäßen Systems bzw. der erfindungsgemäßen Seitenwandverkleidung 1 in einer schematischen Darstellung analog zu Fig. 3, wobei aus Klarheitsgründen erste und zweite Aufhängungen 21, 22 nicht dargestellt sind. Grundsätzlich gilt sämtliches oben zur Ausführungsform der Fig. 1 bis Fig. 8 Gesagte und wird daher an dieser Stelle nicht extra wiederholt. Bei der Ausführungsform der Fig. 9 sind jedoch keine Gleitflächen 13, 15 vorgesehen. Stattdessen weist die erste Führung mehrere übereinander - bzw. entlang der ersten Schwenkachse(n) 6 gesehen hintereinander - angeordnete erste Führungsprofile 12 auf, zwischen denen walzenförmige erste Wälzkörper 31 drehbar gelagert sind, deren Drehachsen parallel zu den ersten Schwenkachsen 6 verlaufen. Analog weist die zweite Führung mehrere übereinander - bzw. entlang der zweiten Schwenkachse(n) 7 gesehen hintereinander - angeordnete zweite Führungsprofile 14 auf, zwischen denen walzenförmige zweite Wälzkörper 32 drehbar gelagert sind, deren Drehachsen parallel zu den zweiten Schwenkachsen 7 verlaufen.

Die ersten Führungsprofile 12 sind mit den ersten Schwenkarmhalterungen 4 im Wesentlichen starr verbunden. Ebenso sind die zweiten Führungsprofile 14 mit den zweiten Schwenkarmhalterungen 5 im Wesentlichen starr verbunden.

Auf zumindest einem der ersten Wälzkörper 31 liegt der Zwischenabschnitt 10a auf, wodurch ein Abgleiten von zumindest diesem der ersten Wälzkörper 31 am Zwischenabschnitt 10a beim Verschwenken der beiden ersten Schwenkarme 2 gewährleistet ist. Bei der in Fig. 9 dargestellten Situation sind die ersten Schwenkarme 2 so verschwenkt, dass der Zwischenabschnitt 10a sämtliche ersten Wälzkörper 31 kontaktiert.

Die ersten Wälzkörper 31 weisen im dargestellten Ausführungsbeispiel im Wesentlichen denselben (in der Zeichenebene gemessenen) Durchmesser auf. Die ersten Wälzkörper 31 bzw. deren Drehachsen sind so angeordnet, dass sich eine gekrümmte Trajektorie für den Zwischenabschnitt 10a ergibt, wenn der Zwischenabschnitt 10a beim Verschwenken der ersten Schwenkarme 2 durch die erste Führung mit den ersten Wälzkörpern 31 geführt wird.

Analog liegt auf zumindest einem der zweiten Wälzkörpern 32 der Zwischenabschnitt 10b auf, wodurch ein Abgleiten von zumindest diesem der zweiten Wälzkörper 32 am Zwischenabschnitt 10b beim Verschwenken der beiden zweiten Schwenkarme 3 gewährleistet ist. Bei der in Fig. 9 dargestellten Situation sind die zweiten Schwenkarme 3 so verschwenkt, dass der Zwischenabschnitt 10b sämtliche zweiten Wälzkörper 32 kontaktiert.

Auch die zweiten Wälzkörper 32 weisen im dargestellten Ausführungsbeispiel im Wesentlichen denselben (in der Zeichenebene gemessenen) Durchmesser auf. Die zweiten Wälzkörper 32 bzw. deren Drehachsen sind so angeordnet, dass sich eine gekrümmte Trajektorie für den Zwischenabschnitt 10b ergibt, wenn der Zwischenabschnitt 10b beim Verschwenken der zweiten Schwenkarme 3 durch die zweite Führung mit den zweiten Wälzkörpern 32 geführt wird.

In Fig. 3, Fig. 4, Fig. 5, Fig. 8 und Fig. 9 entspricht die jeweilige gekrümmte Trajektorie dem jeweiligen sichtbaren gekrümmten Abschnitt der Zwischenabschnitte 10a, 10b.

### BEZUGSZEICHENLISTE

- 1: Seitenwandverkleidung
- 2: Erster Schwenkarm
- 3: Zweiter Schwenkarm
- 4: Erste Schwenkarmhalterung
- 5: Zweite Schwenkarmhalterung
- 6: Erste Schwenkachse
- 7: Zweite Schwenkachse
- 8: Paneel
- 9a, 9b: Endbereich des Paneels
- 10a, 10b: Zwischen-/Gleitabschnitt des Paneels
- 11: Mittenabschnitt des Paneels
- 12: Erstes Führungsprofil
- 13: Erste gekrümmte Gleitfläche
- 14: Zweites Führungsprofil
- 15: Zweite gekrümmte Gleitfläche
- 16a, 16b: Torsionsfeder
- 17: Scherengitter
- 18: Hebelmechanismus
- 19: Drehhebel
- 20a, 20b: Fahrzeugteil
- 21: Erste Aufhängung
- 22: Zweite Aufhängung
- 23: Strebe
- 24: Drehverbindung
- 25: Deckenschürze
- 26: Bodenschürze
- 27: Dreharm
- 28: Drehlager
- 29: Dicke des Mittenabschnitts
- 30: Dicke des Gleitabschnitts
- 31: Erster Wälzkörper
- 32: Zweiter Wälzkörper

## Patentansprüche

1. Seitenwandverkleidung (1) für die Innenseite eines Übergangs zwischen zwei gelenkig miteinander verbundenen Fahrzeugteilen (20a, 20b), umfassend
- ein flexibles Paneel (8),
- zumindest einen ersten Schwenkarm (2), welcher um eine erste Schwenkachse (6) schwenkbar an zumindest einer ersten Schwenkarmhalterung (4) angebunden ist,
- zumindest einen zweiten Schwenkarm (3), der um eine zweite Schwenkachse (7) schwenkbar an zumindest einer zweiten Schwenkarmhalterung (5) angebunden ist,
wobei das Paneel (8) zumindest mit einem Mittenabschnitt (11) zwischen der ersten Schwenkarmhalterung (4) und der zweiten Schwenkarmhalterung (5) angeordnet ist und mit Endbereichen (9a, 9b) an den mindestens einen ersten Schwenkarm (2) und den mindestens einen zweiten Schwenkarm (3) angebunden ist, wobei das Paneel (8) zwischen dem jeweiligen Endbereich (9a, 9b) und dem Mittenabschnitt (11) jeweils einen Zwischenabschnitt (10a, 10b) umfasst, **dadurch gekennzeichnet, dass** mindestens eine erste Führung (12) vorgesehen ist, zu der der mindestens eine erste Schwenkarm (2) durch Verschwenken relativ bewegbar ist, oder dass mindestens eine zweite Führung (14) vorgesehen ist, zu der der mindestens eine zweite Schwenkarm (3) durch Verschwenken relativ bewegbar ist, oder dass mindestens eine erste Führung (12) und mindestens eine zweite Führung (14) vorgesehen sind, zu denen der mindestens eine erste Schwenkarm (2) und der mindestens eine zweite Schwenkarm (3) durch Verschwenken relativ bewegbar sind, wobei jeweils einer der Zwischenabschnitte (10a, 10b) die erste Führung (12) und/oder die zweite Führung (14) kontaktiert und durch Verschwenken des ersten Schwenkarms (2) und/oder des zweiten Schwenkarms (3) relativ zur jeweiligen Führung (12,14) bewegbar ist, wobei die erste Führung (12) und/oder die zweite Führung (14) zur Führung des jeweiligen Zwischenabschnitts (10a, 10b) entlang einer gekrümmten Trajektorie ausgelegt ist/sind.

2. Seitenwandverkleidung (1) nach Anspruch 1, **dadurch gekennzeichnet, dass** die Zwischenabschnitte als Gleitabschnitte (10a, 10b) ausgelegt sind,
dass die mindestens eine erste Führung zumindest ein erstes Führungsprofil (12) mit zumindest einer ersten gekrümmten Gleitfläche (13) umfasst und/oder die mindestens eine zweite Führung zumindest ein zweites Führungsprofil (14) mit zumindest einer zweiten gekrümmten Gleitfläche (15)
und dass auf der ersten gekrümmten Gleitfläche (13) und/oder der zweiten gekrümmten Gleitfläche (15) jeweils einer der Gleitabschnitte (10a, 10b) gleitbar aufliegt, um beim Verschwenken des mindestens einen ersten Schwenkarms (2) und/oder des mindestens einen zweiten Schwenkarms (3) auf der jeweiligen gekrümmten Gleitfläche (13, 15) abzugleiten.

3. Seitenwandverkleidung (1) nach einem der Ansprüche 1 bis 2, **dadurch gekennzeichnet, dass** die mindestens eine erste Führung (12) zumindest einen ersten Wälzkörper (31) umfasst und/oder die mindestens eine zweite Führung (14) zumindest einen zweiten Wälzkörper (32),
dass auf dem ersten Wälzkörper (31) und/oder dem zweiten Wälzkörper (32) jeweils einer der Zwischenabschnitte (10a, 10b) aufliegt, um ein Abgleiten des jeweiligen Wälzkörpers (31, 32) am jeweiligen Zwischenabschnitt (10a, 10b) beim Verschwenken des mindestens einen ersten Schwenkarms (2) und/oder des mindestens einen zweiten Schwenkarms (3) zu gewährleisten.

4. Seitenwandverkleidung (1) nach einem der Ansprüche 1 bis 3, **dadurch gekennzeichnet, dass** Spannmittel (16a, 16b) vorgesehen sind, um den mindestens einen ersten Schwenkarm (2) vorzuspannen und von der mindestens einen ersten Führung (12) weg zu schwenken und/oder um den mindestens einen zweiten Schwenkarm (3) vorzuspannen und von der mindestens einen zweiten Führung (14) weg zu schwenken, wobei die Spannmittel bevorzugt mindestens eine Feder, besonders bevorzugt mindestens eine Torsionsfeder (16a, 16b), umfassen.

5. Seitenwandverkleidung (1) nach einem der Ansprüche 1 bis 4, **dadurch gekennzeichnet, dass** das Paneel (8) mit seinem jeweiligen Endbereich (9a, 9b) beweglich, vorzugsweise verschieblich und/oder verdrehbar, an den mindestens einen ersten Schwenkarm (2) und/oder an den mindestens einen zweiten Schwenkarm (3) angebunden ist.

6. Seitenwandverkleidung (1) nach einem der Ansprüche 1 bis 5, **dadurch gekennzeichnet, dass** die mindestens eine erste Führung (12) mit der mindestens einen ersten Schwenkarmhalterung (4) und/oder die mindestens eine zweite Führung (14) mit der mindestens einen zweiten Schwenkarmhalterung (5) im Wesentlichen starr verbunden sind.

7. Seitenwandverkleidung (1) nach einem der Ansprüche 1 bis 6, **dadurch gekennzeichnet, dass** die mindestens eine erste Schwenkarmhalterung (4) mit der mindestens einen zweiten Schwenkarmhalterung (5) über mindestens ein Scherengitter (17) verbunden ist, wobei das Scherengitter (17) vorzugsweise drehbar an den Schwenkarmhalterungen (4, 5) angebunden ist.

8. Seitenwandverkleidung (1) nach Anspruch 7, **dadurch gekennzeichnet, dass** das Paneel (8), insbesondere mit seinem Mittenabschnitt (11), beweglich mit dem mindestens einen Scherengitter (17) verbunden ist.

9. Seitenwandverkleidung (1) nach Anspruch 8, **dadurch gekennzeichnet, dass** zur beweglichen Verbindung des Paneels (8) mit dem mindestens einen Scherengitter (17) mindestens ein Hebelmechanismus (18) vorgesehen ist, wobei der Hebelmechanismus (18) vorzugsweise mindestens einen Drehhebel (19) umfasst.

10. Seitenwandverkleidung (1) nach einem der Ansprüche 1 bis 9, **dadurch gekennzeichnet, dass** mehrere, vorzugsweise zwei, erste Schwenkarme (2) und/oder mehrere, vorzugsweise zwei, zweite Schwenkarme (3) vorgesehen sind.

11. Seitenwandverkleidung (1) nach einem der Ansprüche 1 bis 10, **dadurch gekennzeichnet, dass** das Paneel (8) aus glasfaserverstärktem Kunststoff gefertigt ist.

12. Seitenwandverkleidung (1) nach einem der Ansprüche 1 bis 11, **dadurch gekennzeichnet, dass** eine Dicke (29) des Mittenabschnitts (11) des Paneels (8) größer ist als eine Dicke (30) des jeweiligen Zwischenabschnitts (10a, 10b).

13. System umfassend zwei gelenkig miteinander verbundene Fahrzeugteile (20a, 20b) sowie einen zwischen den Fahrzeugteilen (20a, 20b) angeordneten Übergang, wobei an der Innenseite des Übergangs eine Seitenwandverkleidung (1) nach einem der Ansprüche 1 bis 12 angebracht ist, wobei der zumindest eine erste Schwenkarm (2) über die zumindest eine erste Schwenkarmhalterung (4) mit einem der Fahrzeugteile (20a) direkt oder indirekt verbunden ist und wobei der zumindest eine zweite Schwenkarm (3) über die zumindest eine zweite Schwenkarmhalterung (5) mit dem anderen Fahrzeugteil (20b) direkt oder indirekt verbunden ist.

14. System nach Anspruch 13, **dadurch gekennzeichnet, dass** an dem einen der beiden Fahrzeugteile (20a) zumindest eine mit diesem starr verbundene erste Aufhängung (21) für die zumindest eine erste Schwenkarmhalterung (4) angeordnet ist
und dass an dem anderen der beiden Fahrzeugteile (20b) zumindest eine mit diesem starr verbundene zweite Aufhängung (22) für die zumindest eine zweite Schwenkarmhalterung (5) angeordnet ist.

15. System nach Anspruch 14, **dadurch gekennzeichnet, dass** die mindestens eine erste Aufhängung (21) eine Verdrehsicherung und/oder einen Schnellverschluss für die zumindest eine erste Schwenkarmhalterung (4) aufweist und/oder dass die mindestens eine zweite Aufhängung (22) eine Verdrehsicherung und/oder einen Schnellverschluss für die zumindest eine zweite Schwenkarmhalterung (5) aufweist.

## Claims

1. A side wall cladding (1) for the inside of a gangway between two vehicle parts (20a, 20b) connected to one another in an articulated manner, comprising:
- a flexible panel (8);
- at least one first pivot arm (2), which is connected to at least one first pivot arm mounting element (4) so as to be pivotable about a first pivot axis (6);
- at least one second pivot arm (3), which is connected to at least one second pivot arm mounting element (5) so as to be pivotable about a second pivot axis (7);
the panel (8), at least with a center section (11), being arranged between the first pivot arm mounting element (4) and the second pivot arm mounting element (5) and, with end regions (9a, 9b), being connected to the at least one first pivot arm (2) and the at least one second pivot arm (3), and the panel (8) between the respective end region (9a, 9b) and the center section (11) in each case comprising an intermediate section (10a, 10b),
**characterized in that** at least one first guide (12) is provided, relative to which the at least one first pivot arm (2) can be moved by pivoting, or that at least one second guide (14) is provided, relative to which the at least one second pivot arm (3) can be moved by pivoting, or that at least one first guide (12) and at least one second guide (14) are provided, relative to which the at least one first pivot arm (2) and the at least one second pivot arm (3) can be moved by pivoting, in each case one of the intermediate sections (10a, 10b) contacting the first guide (12) and/or the second guide (14) and being movable relative to the respective guide (12, 14) by pivoting of the first pivot arm (2) and/or of the second pivot arm (3), and the first guide (12) and/or the second guide (14) being designed to guide the respective intermediate section (10a, 10b) along a curved trajectory.

2. The side wall cladding (1) according to claim 1, **characterized in that** the intermediate sections are designed as sliding sections (10a, 10b),
that the at least one first guide comprises at least one first guide profile (12) having at least one first curved sliding surface (13) and/or the at least one second guide has at least one second guide profile (14) having at least one second curved sliding surface (15),
and that in each case one of the sliding sections (10a, 10b) slidably rests on the first curved sliding surface (13) and/or the second curved sliding surface (15) so as to slide on the respective curved sliding surface (13, 15) when the at least one first pivot arm (2) and/or the at least one second pivot arm (3) are pivoted.

3. The side wall cladding (1) according to any one of claims 1 to 2, **characterized in that** the at least one first guide (12) comprises at least one first rolling element (31) and/or the at least one second guide (14) comprises at least one second rolling element (32), and
that in each case one of the intermediate sections (10a, 10b) rests on the first rolling element (31) and/or the second rolling element (32) so as to ensure that the respective rolling element (31, 32) slides on the respective intermediate section (10a, 10b) when the at least one first pivot arm (2) and/or the at least one second pivot arm (3) are pivoted.

4. The side wall cladding (1) according to any one of claims 1 to 3, **characterized in that** tensioning means (16a, 16b) are provided so as to pretension the at least one first pivot arm (2) and pivot it away from the at least one first guide (12) and/or so as to pretension the at least one second pivot arm (3) and pivot it away from the at least one second guide (14), the tensioning means preferably comprising at least one spring, and particularly preferably at least one torsion spring (16a, 16b).

5. The side wall cladding (1) according to any one of claims 1 to 4, **characterized in that** the panel (8) is movably, preferably displaceably and/or rotatably, connected with the respective end region (9a, 9b) thereof to the at least one first pivot arm (2) and/or to the at least one second pivot arm (3).

6. The side wall cladding (1) according to any one of claims 1 to 5, **characterized in that** the at least one first guide (12) is substantially rigidly connected to the at least one first pivot arm mounting element (4) and/or the at least one second guide (14) is substantially rigidly connected to the at least one second pivot arm mounting element (5).

7. The side wall cladding (1) according to any one of claims 1 to 6, **characterized in that** the at least one first pivot arm mounting element (4) is connected to the at least one second pivot arm mounting element (5) via at least one scissor gate (17), the scissor gate (17) preferably being rotatably connected to the pivot arm mounting elements (4, 5).

8. The side wall cladding (1) according to claim 7, **characterized in that** the panel (8), in particular with the center section (11) thereof, is movably connected to the at least one scissor gate (17).

9. The side wall cladding (1) according to claim 8, **characterized in that** at least one lever mechanism (18) is provided for movably connecting the panel (8) to the at least one scissor gate (17), the lever mechanism (18) preferably comprising at least one rotating lever (19).

10. The side wall cladding (1) according to any one of claims 1 to 9, **characterized in that** a plurality of, preferably two, first pivot arms (2) and/or a plurality of, preferably two, second pivot arms (3) are provided.

11. The side wall cladding (1) according to any one of claims 1 to 10, **characterized in that** the panel (8) is made of glass fiber-reinforced plastic material.

12. The side wall cladding (1) according to any one of claims 1 to 11, **characterized in that** a thickness (29) of the center section (11) of the panel (8) is greater than a thickness (30) of the respective intermediate section (10a, 10b).

13. A system comprising two vehicle parts (20a, 20b) connected to one another in an articulated manner and a gangway arranged between the vehicle parts (20a, 20b), a side wall cladding (1) according to any one of claims 1 to 12 being provided on the inside of the gangway, the at least one first pivot arm (2) being directly or indirectly connected to one of the vehicle parts (20a) via the at least one first pivot arm mounting element (4), and the at least one second pivot arm (3) being directly or indirectly connected to the other vehicle part (20b) via the at least one second pivot arm mounting element (5).

14. The system according to claim 13, **characterized in that** at least one first mounting (21) for the at least one first pivot arm mounting element (4) is arranged at the one of the two vehicle parts (20a), the first mounting being rigidly connected to this vehicle part,
and that at least one second mounting (22) for the at least one second pivot arm mounting element (5) is arranged at the other of the two vehicle parts (20b), the second mounting being rigidly connected to this vehicle part.

15. The system according to claim 14, **characterized in that** the at least one first mounting (21) comprises an anti-turn device and/or a quick-release fastener for the at least one first pivot arm mounting element (4) and/or that the at least one second mounting (22) comprises an anti-turn device and/or a quick-release fastener for the at least one second pivot arm mounting element (5).

## Revendications

1. Revêtement de paroi latérale (1) pour l'intérieur d'une passerelle entre deux pièces de véhicule (20a, 20b) accouplées l'une à l'autre de manière articulée, comprenant :
- un panneau flexible (8) ;
- au moins un premier bras pivot (2), qui est accouplé à au moins un premier élément de montage de bras pivot (4) de manière à pouvoir pivoter autour d'un premier axe pivot (6) ; et
- au moins un second bras pivot (3), qui est accouplé à au moins un second élément de montage de bras pivot (5) de manière à pouvoir pivoter autour d'un second axe pivot (7) ;
le panneau (8), au moins avec une section centrale (11), étant agencé entre le premier élément de montage de bras pivot (4) et le second élément de montage de bras pivot (5) et, avec des régions d'extrémité (9a, 9b), étant accouplé à l'au moins un premier bras pivot (2) et à l'au moins un second bras pivot (3), et le panneau (8) entre la région d'extrémité (9a, 9b) respective et la section centrale (11) comprenant dans chaque cas une section intermédiaire (10a, 10b), **caractérisé en ce que** au moins un premier guide (12) est pourvu, par rapport auquel l'au moins un premier bras pivot (2) peut être déplacé en pivotant, ou **en ce que** l'au moins un second guide (14) est pourvu, par rapport auquel l'au moins un second bras pivot (3) peut être déplacé en pivotant, où **en ce qu'**au moins un premier guide (12) et au moins un second guide (14) sont pourvus, par rapport auxquels l'au moins un premier bras pivot (2) et l'au moins un second bras pivot (3) peuvent être déplacés en pivotant, dans chaque cas l'une des sections intermédiaires (10a, 10b) en contact avec le premier guide (12) et/ou le second guide (14) et pouvant déplacer par rapport au guide (12, 14) respectif en faisant pivoter le premier bras pivot (2) et/ou le second bras pivot (3), et le premier guide (12) et/ou le second guide (14) étant conçus pour guider la section intermédiaire (10a, 10b) respective le long d'une trajectoire incurvée.

2. Revêtement de paroi latérale (1) selon la revendication 1, **caractérisé en ce que** les sections intermédiaires sont conçues en tant que sections coulissantes (10a, 10b),
**en ce que** l'au moins un premier guide comprend au moins un premier profil de guide (12) ayant au moins une première surface coulissante incurvée (13) et/ou l'au moins un second guide a au moins un second profil de guide (14) ayant au moins une seconde surface coulissante incurvée (15),
et **en ce que** dans chaque cas l'une des sections coulissantes (10a, 10b) repose de manière coulissante sur la première surface coulissante incurvée (13) et/ou la seconde surface coulissante incurvée (15) de manière à coulisser sur la surface coulissante incurvée (13, 15) respective lorsque l'au moins un premier bras pivot (2) et/ou l'au moins un second bras pivot (3) pivotent.

3. Revêtement de paroi latérale (1) selon l'une quelconque des revendications 1 à 2, **caractérisé en ce que** l'au moins un premier guide (12) comprend au moins un premier élément de roulement (31) et/ou l'au moins un second guide (14) comprend au moins un second élément de roulement (32), et
**en ce que** dans chaque cas l'une des sections intermédiaires (10a, 10b) repose sur le premier élément de roulement (31) et/ou le second élément de roulement (32) de manière à garantir que l'élément de roulement (31, 32) respectif coulisse sur la section intermédiaire (10a, 10b) respective lorsque l'au moins un premier bras pivot (2) et/ou l'au moins un second bras pivot (3) pivotent.

4. Revêtement de paroi latérale (1) selon l'une quelconque des revendications 1 à 3, **caractérisé en ce que** des moyens de tension (16a, 16b) sont pourvus de sorte à pré-tendre l'au moins un premier bras pivot (2) et le faire pivoter de manière à s'éloigner de l'au moins un premier guide (12) et/ou de sorte à pré-tendre l'au moins un second bras pivot (3) et le faire pivoter de manière à s'éloigner de l'au moins un second guide (14), les moyens de tension comprenant de préférence au moins un ressort, et particulièrement préférentiellement au moins un ressort de torsion (16a, 16b).

5. Revêtement de paroi latérale (1) selon l'une quelconque des revendications 1 à 4, **caractérisé en ce que** le panneau (8) est accouplé de manière mobile, de préférence de manière déplaçable et/ou en rotation, avec la région d'extrémité (9a, 9b) respective de celui-ci à l'au moins un premier bras pivot (2) et/ou à l'au moins un second bras pivot (3).

6. Revêtement de paroi latérale (1) selon l'une quelconque des revendications 1 à 5, **caractérisé en ce que** l'au moins un premier guide (12) est essentiellement accouplé de manière rigide à l'au moins un premier élément de montage de bras pivot (4) et/ou l'au moins un second guide (14) est essentiellement accouplé de manière rigide à l'au moins un second élément de montage de bras pivot (5).

7. Revêtement de paroi latérale (1) selon l'une quelconque des revendications 1 à 6, **caractérisé en ce que** l'au moins un premier élément de montage de bras pivot (4) est accouplé à l'au moins un second élément de montage de bras pivot (5) par l'intermédiaire d'au moins une grille à ciseaux (17), la grille à ciseaux (17) étant de préférence accouplée en rotation aux éléments de montage de bras pivot (4, 5).

8. Revêtement de paroi latérale (1) selon la revendication 7, **caractérisé en ce que** le panneau (8), en particulier avec la section centrale (11) de celui-ci, est accouplé de manière mobile à l'au moins une grille à ciseaux (17).

9. Revêtement de paroi latérale (1) selon la revendication 8, **caractérisé en ce que** au moins un mécanisme de levier (18) est pourvu pour accoupler de manière mobile le panneau (8) à l'au moins une grille à ciseaux (17), le mécanisme de levier (18) comprenant de préférence au moins un levier en rotation (19).

10. Revêtement de paroi latérale (1) selon l'une quelconque des revendications 1 à 9, **caractérisé en ce que** une pluralité de, de préférence deux, premiers bras pivots (2) et/ou une pluralité de, de préférence deux, seconds bras pivots (3) sont pourvus.

11. Revêtement de paroi latérale (1) selon l'une quelconque des revendications 1 à 10, **caractérisé en ce que** le panneau (8) est fabriqué en une matière plastique renforcée de fibres de verre.

12. Revêtement de paroi latérale (1) selon l'une quelconque des revendications 1 à 11, **caractérisé en ce que** une épaisseur (29) de la section centrale (11) du panneau (8) est supérieure à une épaisseur (30) de la section intermédiaire (10a, 10b) respective.

13. Système comprenant deux parties de véhicule (20a, 20b) accouplées l'une à l'autre d'une manière articulée et une passerelle agencée entre les parties de véhicule (20a, 20b), un revêtement de paroi latérale (1) selon l'une quelconque des revendications 1 à 12 étant pourvu sur l'intérieur de la passerelle, l'au moins un premier bras pivot (2) étant directement ou indirectement accouplé à l'une des parties de véhicule (20a) par l'intermédiaire de l'au moins un premier élément de montage de bras pivot (4), et l'au moins un second bras pivot (3) étant directement ou indirectement accouplé à l'autre partie de véhicule (20b) par l'intermédiaire de l'au moins un second élément de montage de bras pivot (5).

14. Système selon la revendication 13, **caractérisé en ce que** au moins un premier montage (21) pour l'au moins un premier élément de montage de bras pivot (4) est agencé au niveau de l'une des deux parties de véhicule (20a), le premier montage étant accouplé de manière rigide à ladite partie de véhicule,
et **en ce qu'**au moins un second montage (22) pour l'au moins un second élément de montage de bras pivot (5) est agencé au niveau de l'autre des deux parties de véhicule (20b), le second montage étant accouplé de manière rigide à ladite partie de véhicule.

15. Système selon la revendication 14, **caractérisé en ce que** l'au moins un premier montage (21) comprend un dispositif anti-rotation et/ou une fixation à libération rapide pour l'au moins un premier élément de montage de bras pivot (4) et **en ce que** l'au moins un second montage (22) comprend un dispositif anti-rotation et/ou une fixation à libération rapide pour l'au moins un second élément de montage de bras pivot (5).
